# EUROPEAN PATENT APPLICATION

(11) **EP 4 235 922 A1**
(43) Date of publication of application: **30.08.2023**
(21) Application number: 22737701.7
(22) Date of filing: 12.01.2022
(51) Int. Cl.: H01M 50/209, H01M 50/342

(54) **BATTERY BOX, BATTERY, ELECTRICAL DEVICE, METHOD AND DEVICE FOR PREPARING BATTERY**

(71) Applicant: Contemporary Amperex Technology Co., Limited, Fujian 352100 (CN)
(72) Inventor: GU, Mingguang, Ningde City Fujian 352100 (CN); JIN, Qiu, Ningde City Fujian 352100 (CN); CHEN, Xiaobo, Ningde City Fujian 352100 (CN); LI, Yao, Ningde City Fujian 352100 (CN)
(74) Representative: Pfenning, Meinig & Partner mbB
(86) International application number: PCT/CN2022/071536
(87) International publication number: WO 2023/133722

(57) **Abstract**

Embodiments of the present application provide a box of a battery, a battery, a power consumption apparatus, and a method and apparatus for producing a battery. The box includes: an electrical chamber configured to accommodate a battery cell, a pressure relief mechanism being disposed on a first wall of the battery cell, and the pressure relief mechanism being configured to be actuated when an internal pressure or temperature of the battery cell reaches a threshold, to relieve the internal pressure; a collecting chamber configured to collect emissions from the battery cell when the pressure relief mechanism is actuated, the collecting chamber being isolated from the electrical chamber; and a first thermal management component configured to accommodate a fluid to adjust a temperature of the battery cell, the first thermal management component being attached to a second wall of the battery cell, and the second wall being different from the first wall. According to technical solutions of the embodiments of the present application, safety of the battery could be enhanced.

## Description

### TECHNICAL FIELD

The present application relates to the field of battery technologies, and in particular, to a box of a battery, a battery, a power consumption apparatus, and a method and apparatus for producing a battery.

### BACKGROUND

Energy conservation and emission reduction are the key to the sustainable development of the automotive industry. In this case, electric vehicles have become an important part of the sustainable development of the automotive industry due to their advantages of energy conservation and environmental protection. For the electric vehicles, the battery technology is an important factor for their development.

In the development of the battery technology, in addition to improving performance of batteries, safety is also an issue that cannot be ignored. If the safety of the batteries cannot be ensured, the batteries cannot be used. Therefore, how to enhance safety of a battery is an urgent technical problem to be solved in the battery technology.

### SUMMARY

The present application provides a box of a battery, a battery, a power consumption device, and a method and apparatus for producing a battery, which could enhance safety of the battery.

In a first aspect, a box of a battery is provided, including: an electrical chamber configured to accommodate a battery cell, a pressure relief mechanism being disposed on a first wall of the battery cell, and the pressure relief mechanism being configured to be actuated when an internal pressure or temperature of the battery cell reaches a threshold, to relieve the internal pressure; a collecting chamber configured to collect emissions from the battery cell when the pressure relief mechanism is actuated; and a first thermal management component configured to accommodate a fluid to adjust a temperature of the battery cell, the first thermal management component being attached to a second wall of the battery cell, and the second wall being different from the first wall.

In a technical solution of an embodiment of the present application, a first thermal management component is attached to a second wall of a battery cell that is not provided with a pressure relief mechanism. In this way, a contact area between the first thermal management component and the battery cell is relatively large, and the effect of adjusting a temperature of the battery cell is relatively significant when the battery cell is working normally. In addition, since the second wall to which the first thermal management component is attached is not a first wall of the battery cell that is provided with the pressure relief mechanism, in this way, when thermal runaway occurs in the battery cell, emissions from the battery cell that are discharged through the pressure relief mechanism are discharged in a direction away from the first thermal management component. Therefore, the emissions do not break through the first thermal management component, which reduces danger and enhances safety of a battery.

In some embodiments, an electrode terminal is disposed on a third wall of the battery cell, the third wall is different from the first wall, and the third wall is different from the second wall.

The wall on which the pressure relief mechanism is located, the wall on which the electrode terminal is located and the wall to which the first thermal management component is attached are three different walls of the battery cell. In this way, when the pressure relief mechanism is actuated, the emissions from the battery cell that are discharged through the pressure relief mechanism are discharged in directions away from the first thermal management component and the electrode terminal. Therefore, the emissions do not break through the first thermal management component. Meanwhile, the influence of the emissions on the electrode terminal can be reduced, the risk of high-voltage ignition is avoided, the danger is reduced, and thus the safety of the battery could be enhanced.

In some embodiments, a first region of the third wall is provided with the electrode terminal; and the box further includes: a second thermal management component configured to accommodate a fluid to adjust the temperature of the battery cell, the second thermal management component being attached to a second region of the third wall, and the second region being different from the first region.

A region of the third wall where the electrode terminal is not disposed may be attached to and provided with a second thermal management component. In this way, the contact area between the thermal management components and the battery cell is further increased, and the effect of adjusting a temperature of the battery cell is relatively significant when the battery cell is working normally. In addition, since the third wall to which the second thermal management component is attached is not the first wall of the battery cell that is provided with the pressure relief mechanism, in this way, when the thermal runaway occurs in the battery cell, the emissions from the battery cell that are discharged through the pressure relief mechanism are discharged in directions away from the second thermal management component and the electrode terminal. Therefore, the emissions do not break through the second thermal management component. Meanwhile, the influence of the emissions on the electrode terminal can be reduced, the risk of high-voltage ignition is avoided, the danger is reduced, and thus the safety of the battery could be enhanced.

In some embodiments, the second region is provided with a protrusion part protruding in a direction away from an interior of the battery cell, and the second thermal management component is attached to the protrusion part.

A protrusion part protruding in a direction away from an interior of the battery cell is disposed on the second region, and the second thermal management component is attached to the protrusion part, which then facilitates the attachment of the second thermal management component to the battery cell.

In some embodiments, the third wall is disposed opposite to the first wall, and the second wall is connected to the third wall and the first wall.

The electrode terminal is disposed on one of two opposite walls of the battery cell, and the pressure relief mechanism is disposed on the other wall. In this way, when the pressure relief mechanism is actuated, the emissions from the battery cell that are discharged through the pressure relief mechanism are discharged in the direction away from the electrode terminal. Therefore, the influence of the emissions on the electrode terminal can be further reduced, the risk of high-voltage ignition is avoided, and the danger is reduced, and thus the safety of the battery could be enhanced.

In some embodiments, the second wall is disposed opposite to the first wall, and the third wall is connected to the second wall and the first wall.

In some embodiments, an electrode terminal is disposed on the second wall.

In some embodiments, the box includes: an isolation component configured to isolate the electrical chamber from the collecting chamber, the isolation component being attached to the first wall.

The electrical chamber for accommodating the battery cell is separated from the collecting chamber for collecting the emissions by using an isolation component. When the pressure relief mechanism is actuated, the emissions from the battery cell enter the collecting chamber, and do not enter the electrical chamber or enter the electrical chamber in a small amount, so that the electrical connection in the electrical chamber may not be affected. Therefore, the safety of the battery could be enhanced.

In some embodiments, the isolation component is provided with a weakened zone, and the weakened zone is configured to be capable of being damaged when the pressure relief mechanism is actuated, so that the emissions pass through the weakened zone and enter the collecting chamber.

By disposing a weakened zone on the isolation component, on the one hand, when the pressure relief mechanism is actuated, the emissions can pass through the weakened zone and enter the collecting chamber, which avoids the emissions to enter the electrical chamber; on the other hand, the isolation between the electrical chamber and the collecting chamber can also be ensured when the pressure relief mechanism is not actuated, which avoids substances in the collecting chamber to enter the electrical chamber.

In some embodiments, the weakened zone is disposed opposite to the pressure relief mechanism. In this way, when the pressure relief mechanism is actuated, the emissions may directly impact on the weakened zone to open the weakened zone.

In some embodiments, the isolation component is provided with a through hole, and the through hole is configured such that the emissions are capable of entering the collecting chamber through the through hole when the pressure relief mechanism is actuated.

In some embodiments, the through hole is disposed opposite to the pressure relief mechanism.

In a second aspect, a battery is provided, including: a plurality of battery cells, a pressure relief mechanism being disposed on a first wall of a battery cell, and the pressure relief mechanism being configured to be actuated when an internal pressure or temperature of the battery cell reaches a threshold, to relieve the internal pressure; and the box according to any embodiment in the first aspect, the plurality of battery cells being accommodated in the box.

In a third aspect, a power consumption apparatus is provided, including: the battery according to the second aspect, the battery being configured to provide electrical energy for the power consumption apparatus.

In a fourth aspect, a method for producing a battery is provided, including: providing a plurality of battery cells, a pressure relief mechanism being disposed on a first wall of a battery cell, and the pressure relief mechanism being configured to be actuated when an internal pressure or temperature of the battery cell reaches a threshold, to relieve the internal pressure; providing a box, the box including an electrical chamber, a collecting chamber and a first thermal management component; and accommodating the plurality of battery cells in the electrical chamber; where the collecting chamber is configured to collect emissions from the battery cell when the pressure relief mechanism is actuated; and the first thermal management component is configured to accommodate a fluid to adjust a temperature of the battery cell, the first thermal management component is attached to a second wall of the battery cell, and the second wall is different from the first wall.

In a fifth aspect, an apparatus for producing a battery is provided, including: a providing module configured to: provide a plurality of battery cells, a pressure relief mechanism being disposed on a first wall of a battery cell, and the pressure relief mechanism being configured to be actuated when an internal pressure or temperature of the battery cell reaches a threshold, to relieve the internal pressure; and provide a box, the box including an electrical chamber, a collecting chamber and a first thermal management component; and an installing module configured to accommodate the plurality of battery cells in the electrical chamber, where the collecting chamber is configured to collect emissions from the battery cell when the pressure relief mechanism is actuated; and the first thermal management component is configured to accommodate a fluid to adjust a temperature of the battery cell, the first thermal management component is attached to a second wall of the battery cell, and the second wall is different from the first wall.

### BRIEF DESCRIPTION OF DRAWINGS

In order to illustrate technical solutions in embodiments of the present application more clearly, brief description will be made below to accompanying drawings required in the embodiments of the present application. Apparently, the accompanying drawings described below are some embodiments of the present application only, and other drawings could be obtained based on these accompanying drawings by those ordinary skilled in this art without creative efforts.
FIG. 1 is a schematic structural diagram of a vehicle disclosed in an embodiment of present application;
FIG. 2 is a schematic structural diagram of a battery disclosed in an embodiment of the present application;
FIG. 3 is a schematic structural diagram of a battery module disclosed in an embodiment of the present application;
FIG. 4 is an exploded view of a battery cell disclosed in an embodiment of the present application;
FIG. 5 is an exploded view of a battery cell disclosed in an embodiment of the present application;
FIG. 6 is a schematic cross-sectional view of a structure of a box of a battery disclosed in an embodiment of the present application;
FIG. 7 is an enlarged schematic diagram of a portion A of the box shown in FIG. 6;
FIG. 8 to FIG. 13 are schematic cross-sectional views of structures of boxes of batteries disclosed in other embodiments of the present application;
FIG. 14 is a schematic structural diagram of a battery disclosed in an embodiment of the present application;
FIG. 15 is a schematic flowchart of a method for producing a battery disclosed in an embodiment of the present application; and
FIG. 16 is a schematic block diagram of an apparatus for producing a battery disclosed in an embodiment of the present application.

In the accompanying drawings, the accompanying drawings are not drawn to actual scale.

### DESCRIPTION OF EMBODIMENTS

Implementation manners of the present application will be further described below in detail with reference to drawings and embodiments. The detailed description of the following embodiments and the accompanying drawings are used to exemplarily illustrate principles of the present application, but cannot be used to limit the scope of the present application, that is, the present application is not limited to the described embodiments.

In the depiction of the present application, it should be noted that, unless otherwise illustrated, the meaning of "a plurality of" is two or more; and orientations or positional relationships indicated by terms such as "up", "down", "left", "right", "inside", and "outside" are merely for convenience of describing the present application and for simplifying the description, rather than for indicating or implying that an apparatus or element indicated must have a specific orientation, and must be constructed and operated in a specific orientation, which thus shall not be understood as limitation to the present application. In addition, the terms such as "first", "second", and "third" are merely intended for the purpose of description, and shall not be understood as an indication or implication of relative importance. "Vertical" is not strictly vertical, but within an allowable range of error. "Parallel" is not strictly parallel, but within an allowable range of error.

The terms representing orientations in the following description are all directions shown in the drawings, and do not limit the specific structure of the present application. In the description of the present application, it should be further noted that, unless otherwise explicitly specified and defined, terms "installation", "interconnection", "connection" and "attachment" should be understood in a broad sense; for example, they may be either a fixed connection, or a detachable connection, or an integrated connection; and they may be either a direct connection, or an indirect connection through an intermediate medium. Those of ordinary skill in the art may appreciate the specific meanings of the foregoing terms in the present application according to specific conditions.

In the present application, the term "and/or" is only an association relation describing associated objects, which means that there may be three relations. For example, A and/or B may represent three situations: A exists alone, both A and B exist, and B exists alone. In addition, the character "/" in the present application generally indicates that the associated objects before and after the character are in an "or" relationship.

In the present application, "a plurality of" means two or more (including two). Similarly, "a plurality of groups" means two or more groups (including two groups), and "a plurality of sheets" means two or more sheets (including two sheets).

In the present application, a battery cell may include a lithium-ion secondary battery, a lithium-ion primary battery, a lithium-sulfur battery, a sodium/lithium-ion battery, a sodium-ion battery, a magnesium-ion battery, or the like, which is not limited in the embodiments of the present application. The battery cell may be cylindrical, flat, cuboid or in another shape, which is also not limited in the embodiments of the present application. A battery cell is generally divided into three types according to the way of packaging: a cylindrical battery cell, a prismatic battery cell and a pouch battery cell, which is also not limited in the embodiments of the present application.

The battery mentioned in the embodiments of the present application refers to a single physical module including one or more battery cells to provide a higher voltage and capacity. For example, the battery mentioned in the present application may include a battery module, a battery pack or the like. The battery generally includes a box for packaging one or more battery cells. The box can avoid liquid or other foreign matters to affect charging or discharging of the battery cell.

The battery cell includes an electrode assembly and an electrolytic solution, and the electrode assembly is composed of a positive electrode sheet, a negative electrode sheet and a separator. The operation of the battery cell mainly relies on movement of metal ions between the positive electrode sheet and the negative electrode sheet. The positive electrode sheet includes a positive electrode current collector and a positive electrode active material layer. The positive electrode active material layer is coated on a surface of the positive electrode current collector, the current collector not coated with the positive electrode active material layer protrudes from the current collector coated with the positive electrode active material layer, and the current collector not coated with the positive electrode active material layer is used as a positive electrode tab. In an example of a lithium-ion battery, the material of the positive electrode current collector may be aluminum, and the positive electrode active material may be lithium cobalt oxides, lithium iron phosphate, ternary lithium, lithium manganate, or the like. The negative electrode sheet includes a negative electrode current collector and a negative electrode active material layer. The negative electrode active material layer is coated on a surface of the negative electrode current collector, the current collector not coated with the negative electrode active material layer protrudes from the current collector coated with the negative electrode active material layer, and the current collector not coated with the negative electrode active material layer is used as a negative electrode tab. The material of the negative electrode current collector may be copper, and the negative electrode active material may be carbon, silicon, or the like. In order to ensure that no fusing occurs when a large current passes, there are a plurality of positive electrode tabs which are stacked together, and there are a plurality of negative electrode tabs which are stacked together. The material of the separator may be PP, PE, or the like. In addition, the electrode assembly may be a winding structure or a laminated structure, and the embodiments of the present application are not limited thereto.

With the development of the battery technology, it is necessary to consider design factors in multiple aspects simultaneously, such as energy density, cycle life, discharge capacity, C-rate and other performance parameters. In addition, safety of the battery should also be considered.

For a battery cell, a main safety hazard comes from charging and discharging processes, and a suitable environmental temperature design is also required. In order to effectively avoid unnecessary losses, at least three protection measures are generally taken for the battery cell. Specifically, the protection measures include at least a switch element, a material selected properly for a separator and a pressure relief mechanism. The switch element refers to an element that can stop charging or discharging of a battery when a temperature or resistance in a battery cell reaches a certain threshold. The separator is configured to separate a positive electrode sheet from a negative electrode sheet, and micron-sized (or even nanoscale) micropores attached thereto may be automatically melted when the temperature rises to a certain value, so that metal ions cannot pass on the separator and the internal reaction of the battery cell is terminated.

The pressure relief mechanism refers to an element or component that is actuated when an internal pressure or temperature of the battery cell reaches a predetermined threshold, to relieve the internal pressure or temperature. The threshold design is different according to different design demands. The threshold may depend on a material of one or more of a positive electrode sheet, a negative electrode sheet, an electrolytic solution and a separator in the battery cell. The pressure relief mechanism may take the form of an anti-explosion valve, an air valve, a pressure relief valve, a safety valve, or the like, and may specifically adopt a pressure-sensitive or temperature-sensitive element or structure. That is, when the internal pressure or temperature of the battery cell reaches a predetermined threshold, the pressure relief mechanism performs an action or a weakened structure provided in the pressure relief mechanism is damaged, so as to form an opening or a channel for relieving the internal pressure or temperature.

The "actuation" mentioned in the present application means that the pressure relief mechanism acts or is activated to a certain state, so that the internal pressure and temperature of the battery cell can be relieved. The action generated by the pressure relief mechanism may include but is not limited to: at least a portion of the pressure relief mechanism being fractured, broken, torn or opened, and so on. When the pressure relief mechanism is actuated, high-temperature and high-pressure substances in the interior of the battery cell are discharged outward from an actuated position as emissions. In this way, the pressure and temperature of the battery cell can be relieved at a controllable pressure or temperature, thereby avoiding potentially more serious accidents.

The emissions from the battery cell mentioned in the present application include but are not limited to: an electrolytic solution, dissolved or split positive and negative electrode sheets, fragments of a separator, high-temperature and high-pressure gas generated by reaction, flame, or the like.

The pressure relief mechanism on the battery cell has an important impact on the safety of the battery For example, when short circuit, overcharge and other phenomena occur, it may lead to thermal runaway in the interior of the battery cell, resulting in a sudden increase in pressure or temperature. In this case, the internal pressure and temperature can be released outward through the actuation of the pressure relief mechanism, to prevent the battery cell from exploding and catching fire.

At present, in an assembly solution of a battery, a thermal management component is usually attached to a wall of a battery cell that is provided with a pressure relief mechanism. In this way, when the battery cell is working normally, the thermal management component can adjust a temperature of the battery cell. However, since the pressure relief mechanism is generally disposed on a wall of the battery cell that has a small area, the effect of adjusting the temperature of the battery cell is not significant when the battery cell is working normally. In addition, when thermal runaway occurs in the battery cell, for example, when the pressure relief mechanism of the battery cell is actuated, the power and destructive power of emissions from the battery cell that are discharged through the pressure relief mechanism may be very great, which may even be enough to break through the thermal management component in this direction, and cause safety concerns.

In view of this, the present application provides a technical solution. A thermal management component is attached to a wall of a battery cell that is not provided with a pressure relief mechanism. In this way, since a contact area between the thermal management component and the battery cell is relatively large, the effect of adjusting a temperature of the battery cell is relatively significant when the battery cell is working normally. In addition, since the wall to which the thermal management component is attached is not a wall of the battery cell that is provided with the pressure relief mechanism, in this way, when thermal runaway occurs in the battery cell, emissions from the battery cell that are discharged through the pressure relief mechanism are discharged in a direction away from the thermal management component. Therefore, the emissions do not break through the thermal management component, which enhances safety of a battery.

The thermal management component is configured to accommodate a fluid to adjust the temperature of a plurality of battery cells. The fluid here may be liquid or gas, and the temperature adjustment means heating or cooling the plurality of battery cells. In a case of cooling or lowering the temperature of the battery cells, the thermal management component is configured to accommodate a cooling fluid to lower the temperature of the plurality of battery cells. In this case, the thermal management component may also be called as a cooling component, a cooling system, a cooling plate, or the like. The fluid accommodated in it may also be called as a cooling medium or a cooling fluid, and more specifically, may be called as a cooling liquid or a cooling gas. In addition, the thermal management component may also be configured for heating to raise the temperature of the plurality of battery cells, which is not limited in the embodiments of the present application. Optionally, the fluid may flow in a circulating manner to achieve a better temperature adjustment effect. Optionally, the fluid may be water, a mixture of water and ethylene glycol, air, or the like.

The technical solutions described in the embodiments of the present application are all applicable to various apparatuses using batteries, such as mobile phones, portable devices, notebook computers, electromobiles, electric toys, electric tools, electric vehicles, ships and spacecrafts. For example, the spacecrafts include airplanes, rockets, space shuttles, spaceships, and the like.

It should be understood that the technical solutions described in the embodiments of the present application are not only applicable to the devices described above, but also applicable to all devices using batteries. However, for brief description, the following embodiments are all described by an example of an electric vehicle.

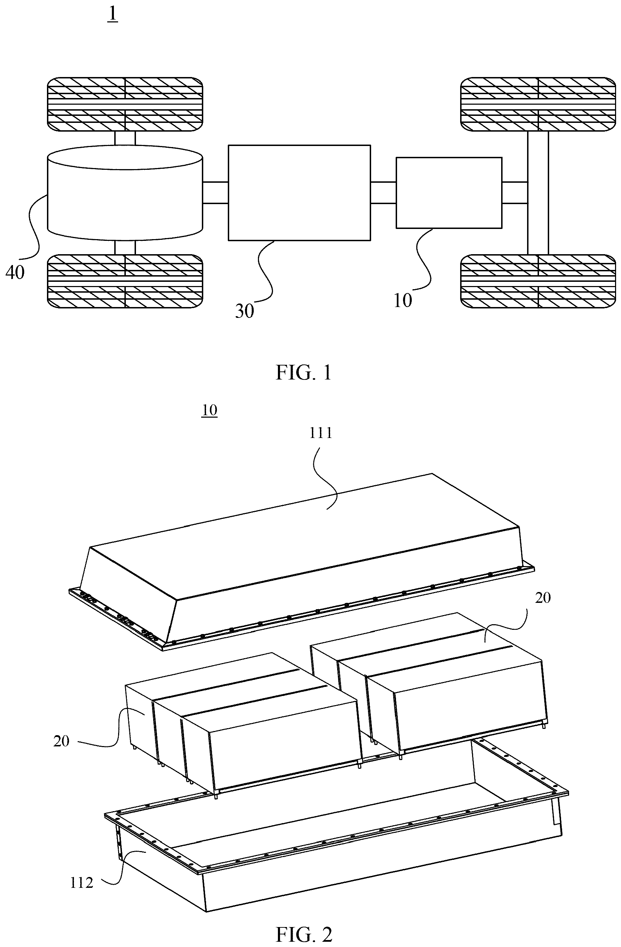

For example, as shown in FIG. 1, FIG. 1 is a schematic structural diagram of a vehicle 1 disclosed in an embodiment of the present application. The vehicle 1 may be a fuel-powered vehicle, a gas-powered vehicle or a new energy vehicle, and the new energy vehicle may be a battery electric vehicle, a hybrid vehicle, an extended-range vehicle, or the like. A motor 40, a controller 30 and a battery 10 may be disposed in an interior of the vehicle 1, and the controller 30 is configured to control the battery 10 to supply power to the motor 40. For example, the battery 10 may be disposed at the bottom, head or tail of the vehicle 1. The battery 10 may be configured to supply power to the vehicle 1. For example, the battery 10 may be used as an operation power source of the vehicle 1 for a circuit system of the vehicle 1, for example, for a working power demand of the vehicle 1 during startup, navigation and running. In another embodiment of the present application, the battery 10 may be used not only as an operation power source of the vehicle 1, but also as a driving power source of the vehicle 1, replacing or partially replacing fuel or natural gas to provide driving power for the vehicle 1.

In order to meet different power usage demands, the battery may include a plurality of battery cells, where the plurality of battery cells may be in series connection, parallel connection or series-parallel connection. The series-parallel connection refers to a combination of series connection and parallel connection. The battery may also be referred to as a battery pack. Optionally, the plurality of battery cells may be first connected in series, in parallel or in series and parallel to constitute a battery module, and then a plurality of battery modules are connected in series, in parallel or in series and parallel to constitute a battery. That is, the plurality of battery cells may directly constitute a battery, or may first constitute a battery module, and then battery modules constitute a battery.

For example, as shown in FIG. 2, FIG. 2 is a schematic structural diagram of a battery 10 disclosed in an embodiment of the present application. The battery 10 may include a plurality of battery cells 20. The battery 10 may further include a box (which is also referred to as a covering), an interior of the box is a hollow structure, and the plurality of battery cells 20 are accommodated in the box. As shown in FIG. 2, the box may include two portions, which are referred to as a first portion 111 and a second portion 112, respectively, and the first portion 111 and the second portion 112 are fastened together. Shapes of the first portion 111 and the second portion 112 may be determined according to a shape of a combination of the plurality of battery cells 20, and the first portion 111 and the second portion 112 may each have an opening. For example, the first portion 111 and the second portion 112 each may be a hollow cuboid and each have only one surface as a surface with an opening, the opening of the first portion 111 is disposed opposite to the opening of the second portion 112, and the first portion 111 and the second portion 112 are fastened to each other to form a box with a closed chamber. The plurality of battery cells 20 are combined in parallel connection or series connection or series-parallel connection and then placed in the box formed after the first portion 111 and the second portion 112 are fastened.

Optionally, the battery 10 may further include another structure, which will not be repeated redundantly herein. For example, the battery 10 may further include a bus component, and the bus component is configured to implement electrical connection between the plurality of battery cells 20, such as parallel connection, series connection or series-parallel connection. Specifically, the bus component may implement the electrical connection between the battery cells 20 by connecting electrode terminals of the battery cells 20. Further, the bus component may be fixed to the electrode terminals of the battery cells 20 by means of welding. Electric energy of the plurality of battery cells 20 may be further led out through an electrically conductive mechanism to pass through the box. Optionally, the electrically conductive mechanism may also belong to the bus component.

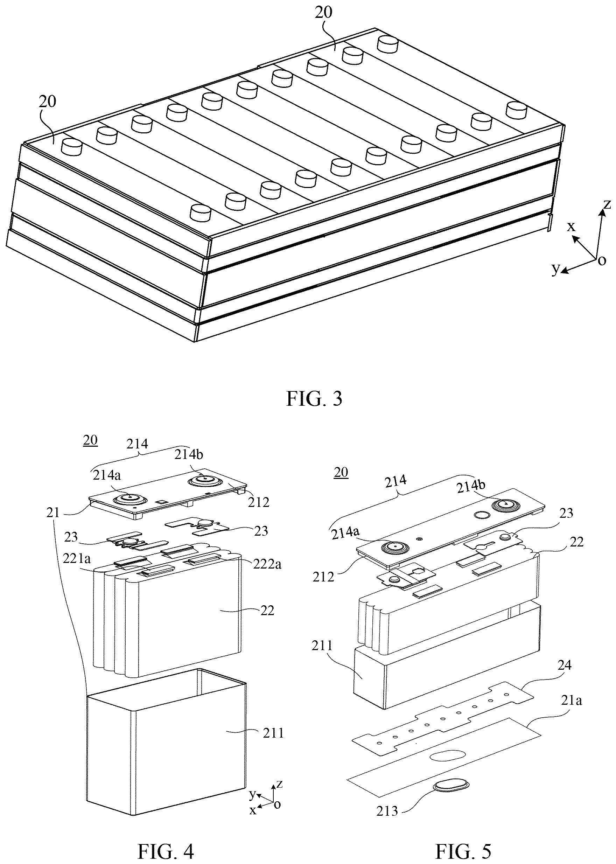

According to different power demands, the number of battery cells 20 may be set to any value. The plurality of battery cells 20 may be connected in series, in parallel or in series and parallel to implement a larger capacity or power. Since there may be many battery cells 20 included in each battery 10, the battery cells 20 may be arranged in groups for convenience of installation, and each group of battery cells 20 constitutes a battery module. The number of battery cells 20 included in the battery module is not limited and may be set according to demands. For example, FIG. 3 is an example of the battery module. The battery may include a plurality of battery modules, and these battery modules may be connected in series, in parallel or in series and parallel. As shown in FIG. 4, FIG. 4 is a schematic structural diagram of a battery cell 20 according to an embodiment of the present application. The battery cell 20 includes one or more electrode assemblies 22, a housing 211 and a cover plate 212. The coordinate system shown in FIG. 4 is the same as that in FIG. 3. The housing 211 and the cover plate 212 form a shell or a battery case 21. A wall of the housing 211 and the cover plate 212 each are referred to as a wall of the battery cell 20. The housing 211 is shaped according to a shape of the one or more electrode assemblies 22 after combination. For example, the housing 211 may be a hollow cuboid or cube or cylinder, and one face of the housing 211 has an opening, so that the one or more electrode assemblies 22 may be placed in the housing 211. For example, when the housing 211 is a hollow cuboid or cube, one plane of the housing 211 is a surface with an opening, that is, the plane does not have a wall, so that the inside and outside of the housing 211 are in communication with each other. When the housing 211 may be a hollow cylinder, an end face of the housing 211 is a surface with an opening, that is, the end face does not have a wall, so that the inside and outside of the housing 211 are in communication with each other. The cover plate 212 covers the opening and is connected to the housing 211 to form a closed cavity in which the electrode assemblies 22 are placed. The housing 211 is filled with an electrolyte, such as an electrolytic solution.

The battery cell 20 may further include two electrode terminals 214, and the two electrode terminals 214 may be disposed on the cover plate 212. The cover plate 212 is generally in a shape of a flat plate, and the two electrode terminals 214 are fixed on a flat plate face of the cover plate 212. The two electrode terminals 214 are a first electrode terminal 214a and a second electrode terminal 214b, respectively. The first electrode terminal 214a and the second electrode terminal 214b have opposite polarities. For example, when the first electrode terminal 214a is a positive electrode terminal, the second electrode terminal 214b is a negative electrode terminal. Each electrode terminal 214 is correspondingly provided with a connecting member 23 also called as a current collecting member 23, which is located between the cover plate 212 and the electrode assembly 22 and configured to electrically connect the electrode assembly 22 to the electrode terminal 214.

As shown in FIG. 4, each electrode assembly 22 has a first electrode tab 221a and a second electrode tab 222a. The first electrode tab 221a and the second electrode tab 222a have opposite polarities. For example, when the first electrode tab 221a is a positive electrode tab, the second electrode tab 222a is a negative electrode tab. First electrode tabs 221a of the one or more electrode assemblies 22 are connected to one electrode terminal through one connecting member 23, and second electrode tabs 222a of the one or more electrode assemblies 22 are connected to the other electrode terminal through the other connecting member 23. For example, the positive electrode terminal is connected to the positive electrode tab through one connecting member 23, and the negative electrode terminal is connected to the negative electrode tab through the other connecting member 23.

In this battery cell 20, according to actual usage demands, one or more electrode assembly 22 may be provided. As shown in FIG. 4, four independent electrode assemblies 22 are disposed in the battery cell 20.

As shown in FIG. 5, FIG. 5 is a schematic structural diagram of a battery cell 20 including a pressure relief mechanism 213 according to another embodiment of the present application.

The housing 211, the cover plate 212, the electrode assembly 22 and the connecting member 23 in FIG. 5 are consistent with the housing 211, the cover plate 212, the electrode assembly 22 and the connecting member 23 in FIG. 4, which will not be redundantly herein for brevity.

The pressure relief mechanism 213 may also be disposed on a wall of the battery cell 20, such as a first wall 21a shown in FIG. 5. For convenience of display, the first wall 21a is separated from the housing 211 in FIG. 5, but this does not limit that a bottom side of the housing 211 has an opening. The pressure relief mechanism 213 is configured to be actuated when an internal pressure or temperature of the battery cell 20 reaches a threshold, to relieve the internal pressure or temperature.

The pressure relief mechanism 213 may be a portion of the first wall 21a, or may be a separate structure from the first wall 21a, and is fixed to the first wall 21a by means of welding, for example. When the pressure relief mechanism 213 is a portion of the first wall 21a, for example, the pressure relief mechanism 213 may be formed by providing an indentation on the first wall 21a, a thickness of the first wall 21a corresponding to the indentation is smaller than that of another region of the pressure relief mechanism 213 other than the indentation. The indentation is the weakest position of the pressure relief mechanism 213. When excessive gas generated by the battery cell 20 causes an internal pressure of the housing 211 to rise and reach a threshold, or heat generated by an internal reaction of the battery cell 20 causes an internal temperature of the battery cell 20 to rise and reach a threshold, the pressure relief mechanism 213 may be fractured at the indentation, resulting in the communication between the inside and outside of the housing 211. The gas pressure and temperature are released outward through the cracking of the pressure relief mechanism 213, thereby avoiding explosion of the battery cell 20.

Optionally, in an embodiment of the present application, as shown in FIG. 5, in a case that the pressure relief mechanism 213 is disposed on the first wall 21a of the battery cell 20, a third wall of the battery cell 20 is provided with electrode terminals 214, and the third wall is different from the first wall 21a.

Optionally, the third wall is disposed opposite to the first wall 21a. For example, the first wall 21a may be a bottom wall of the battery cell 20, and the third wall may be a top wall of the battery cell 20, that is, the cover plate 212.

Optionally, as shown in FIG. 5, the battery cell 20 may further include a backing plate 24. The backing plate 24 is located between the electrode assembly 22 and a bottom wall of the housing 211, may play a role of supporting the electrode assembly 22, and may also effectively prevent the electrode assembly 22 from interfering with rounded corners of a periphery of the bottom wall of the housing 211. In addition, one or more through holes may be disposed on the backing plate 24. For example, a plurality of through holes evenly arranged may be disposed, or when the pressure relief mechanism 213 is disposed on the bottom wall of the housing 211, a through hole is disposed at a position corresponding to the pressure relief mechanism 213, so as to guide liquid and gas. Specifically, this may cause spaces of an upper surface and a lower surface of the backing plate 24 to be in communication, and gas generated in the battery cell 20 and the electrolytic solution can freely pass through the backing plate 24.

The pressure relief mechanism 213 and the electrode terminals 214 are disposed on different walls of the battery cell 20, so that when the pressure relief mechanism 213 is actuated, emissions from the battery cell 20 may be farther away from the electrode terminals 214, thereby reducing the impact of the emissions on the electrode terminals 214 and the bus component, and therefore safety of the battery could be enhanced.

Further, when the electrode terminals 214 are disposed on the cover plate 212 of the battery cell 20, the pressure relief mechanism 213 is disposed on a bottom wall of the battery cell 20, so that when the pressure relief mechanism 213 is actuated, the emissions from the battery cell 20 are discharged to a bottom of the battery 10. The bottom of the battery 10 is usually away from a user, thereby reducing harm to the user.

The pressure relief mechanism 213 may be various possible pressure relief structures, which is not limited in the embodiments of the present application. For example, the pressure relief mechanism 213 may be a temperature-sensitive pressure relief mechanism, the temperature-sensitive pressure relief mechanism is configured to be capable of being melted when the internal temperature of the battery cell 20 provided with the pressure relief mechanism 213 reaches a threshold; and/or the pressure relief mechanism 213 may be a pressure-sensitive pressure relief mechanism, and the pressure-sensitive pressure relief mechanism is configured to be capable of being fractured when an internal gas pressure of the battery cell 20 provided with the pressure relief mechanism 213 reaches a threshold.

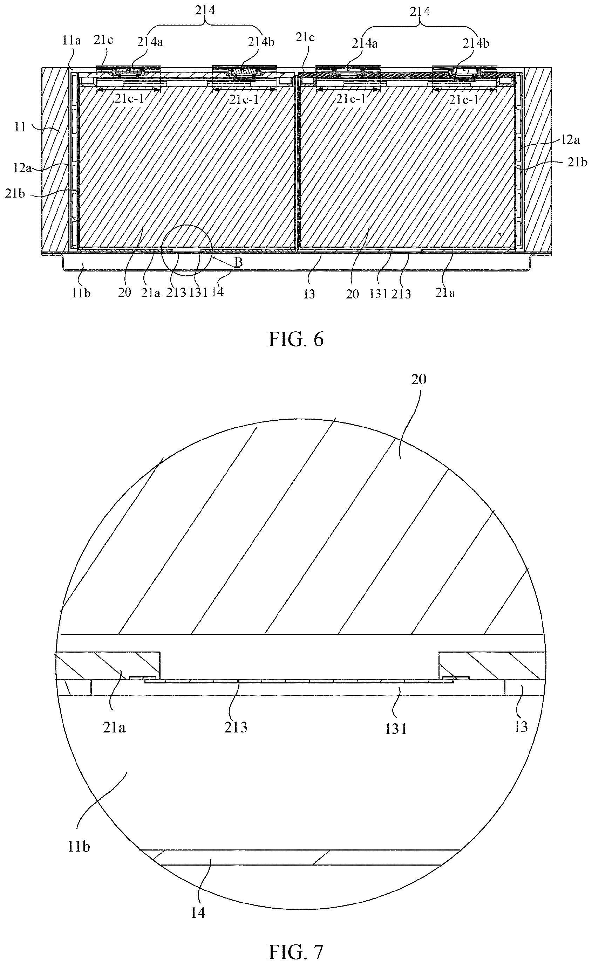

FIG. 6 to FIG. 14 are schematic diagrams of boxes 11 of batteries disclosed in embodiments of the present application. FIG. 7 is an enlarged schematic diagram of a portion A of the box 11 shown in FIG. 6.

For example, as shown in FIG. 6 to FIG. 14, a box 11 includes an electrical chamber 1 1a, a collecting chamber 11b and a first thermal management component 12a. The electrical chamber 11a is configured to accommodate a battery cell 20, a pressure relief mechanism 213 is disposed on a first wall 21a of the battery cell 20, and the pressure relief mechanism 213 is configured to be actuated when an internal pressure or temperature of the battery cell 20 reaches a threshold, to relieve the internal pressure. The collecting chamber 11b is configured to collect emissions from the battery cell 20 when the pressure relief mechanism 213 is actuated. The first thermal management component 12a is configured to accommodate a fluid to adjust a temperature of the battery cell 20, the first thermal management component 12a is attached to a second wall 21b of the battery cell 20, and the second wall 21b is different from the first wall 21a.

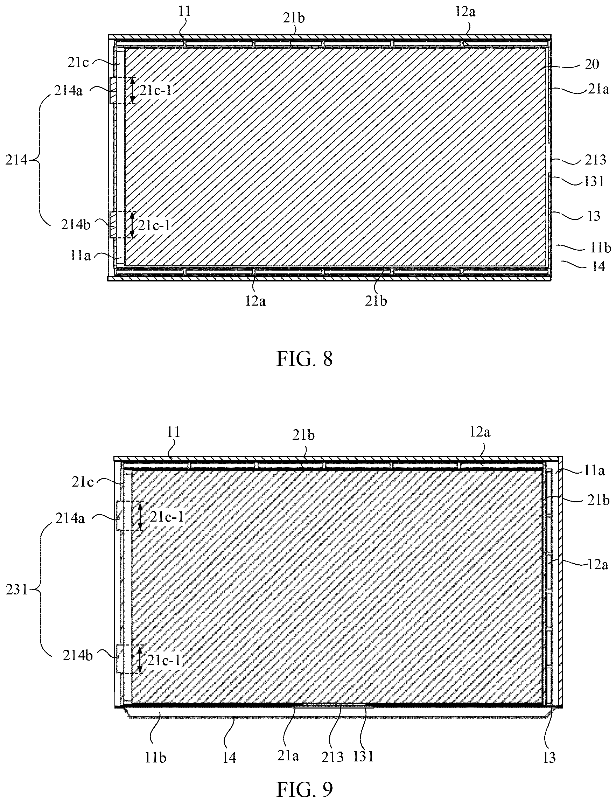

The number of battery cells 20 accommodated in the electrical chamber 11a is not limited in the embodiments of the present application. It should be noted that FIG. 6, FIG. 10 and FIG. 13 are described by an example that the number of battery cells 20 is two, and FIG. 8, FIG. 9, FIG. 11 and FIG. 12 are described by an example that the number of battery cells 20 is one, which should not constitute limitation to the present application.

The electrical chamber 111a may be sealed or unsealed, which is not limited in the embodiments of the present application.

The electrical chamber 11a provides an installation space for the battery cells 20. In some embodiments, a structure configured to fix the battery cell 20 may further be disposed in the electrical chamber 11a. A shape of the electrical chamber 11a may be determined according to the battery cell 20 accommodated therein.

In some embodiments, the electrical chamber 11a may be a cube with six walls. Since the battery cells 20 in the electrical chamber 11a are electrically connected to form higher voltage output, the electrical chamber may also be referred to as a "high-voltage chamber".

The collecting chamber 11b is configured to collect emissions, and may be sealed or unsealed, which is not limited in the embodiments of the present application.

In some embodiments, the collecting chamber 11b may contain air or another gas. In the collecting chamber, there is no electrical connection to the voltage output. Corresponding to the "high-voltage chamber", the collecting chamber 11b may also be referred to as a "low-voltage chamber".

Optionally or additionally, the collecting chamber 11b may also contain a liquid, such as a cooling medium, or be provided with a component for accommodating the liquid to further lower the temperature of the emissions entering the collecting chamber 11b. Further, optionally, the gas or liquid in the collecting chamber 11b flows in a circulating manner.

The number of second walls 21b is not limited in the embodiments of the present application.

Exemplarily, if the battery cell 20 is cuboid, for example, as shown in FIG. 6, FIG. 10 and FIG. 13, the second wall 21b includes a wall adjacent to an inner wall of the box 11. For another example, the second wall 21b includes a wall adjacent to an inner wall of the box 11 and adjacent walls between two battery cells 20. For another example, the second wall 21b includes walls of the battery cell 20 other than the first wall 21a.

Optionally, in some embodiments, in order to increase a contact area between the first thermal management component 12a and the battery cell 20 to cause the first thermal management component 12a to have a more significant effect on temperature adjustment of the battery cell 20, the second wall 21b may be a wall having a largest area among all the walls of the battery cell 20 other than the first wall 21a; or the first wall 21a may be a wall having a smallest area among all the walls of the battery cell 20, that is, it is equivalent to that the second wall 21b is not a wall of the battery cell 20 that has a smallest area.

In a case of lowering the temperature of the battery cell 20, the first thermal management component 12a may accommodate a cooling medium to adjust the temperature of the battery cell 20. In this case, the first thermal management component 12a may also be called as a cooling component, a cooling system, a cooling plate, or the like.

In addition, optionally, the first thermal management component 12a may also be configured for heating, which is not limited in the embodiments of the present application.

Optionally, the fluid accommodated in the first thermal management component 12a may flow in a circulating manner to achieve a better temperature adjustment effect.

The connection manner of the first thermal management component 12a to the battery cell 20 is not limited in the embodiments of the present application. For example, the first thermal management component 12a may be fixedly connected to the battery cell 20 by an adhesive.

In an embodiment of the present application, the first thermal management component 12a is attached to the second wall 21b of the battery cell 20 that is not provided with a pressure relief mechanism 213. In this way, since the contact area between the first thermal management component 12a and the battery cell 20 is relatively large, the effect of adjusting the temperature of the battery cell 20 is relatively significant when the battery cell 20 is working normally.

In addition, since the second wall 21b to which the first thermal management component 12a is attached is not the first wall 21a of the battery cell 20 that is provided with the pressure relief mechanism 213, in this way, when thermal runaway occurs in the battery cell 20, emissions from the battery cell 20 that are discharged through the pressure relief mechanism 213 are discharged in a direction away from the first thermal management component 12a. Therefore, the emissions do not break through the first thermal management component 12a, which enhances the safety of the battery.

Optionally, in some embodiments, an electrode terminal 214 is disposed on a third wall 21c of the battery cell 20. The third wall 21c is different from the first wall 21a, and the third wall 21c is different from the second wall 21b. That is, the wall on which the pressure relief mechanism 213 is located, the wall on which the electrode terminal 214 is located and the wall to which the first thermal management component 12a is attached are three different walls of the battery cell 20. In this way, when the pressure relief mechanism 213 is actuated, the emissions from the battery cell 20 that are discharged through the pressure relief mechanism 213 are discharged in directions away from the first thermal management component 12a and the electrode terminal 214. Therefore, the emissions do not break through the first thermal management component 12a. Meanwhile, the influence of the emissions on the electrode terminal 214 can be reduced, the risk of high-voltage ignition is avoided, the danger is reduced, and thus the safety of the battery could be enhanced.

The number of third walls 21c is not limited in the embodiments of the present application.

The number of electrode terminals 214 disposed on the third wall 21c is not limited in the embodiments of the present application.

In a case that the number of third walls 21c is one, two electrode terminals 214 may be disposed on the third wall 21c, and the two electrode terminals 214 have opposite polarities.

For example, as shown in FIG. 8 to FIG. 10, a first electrode terminal 214a and a second electrode terminal 214b are disposed on the third wall 21c, and the first electrode terminal 214a and the second electrode terminal 214b have opposite polarities. For example, when the first electrode terminal 214a is a positive electrode terminal, the second electrode terminal 214b is a negative electrode terminal.

In a case that the number of third walls 21c is two, one electrode terminal 214 is disposed on each third wall 21c, and electrode terminals 214 disposed on the two third walls 21c have opposite polarities.

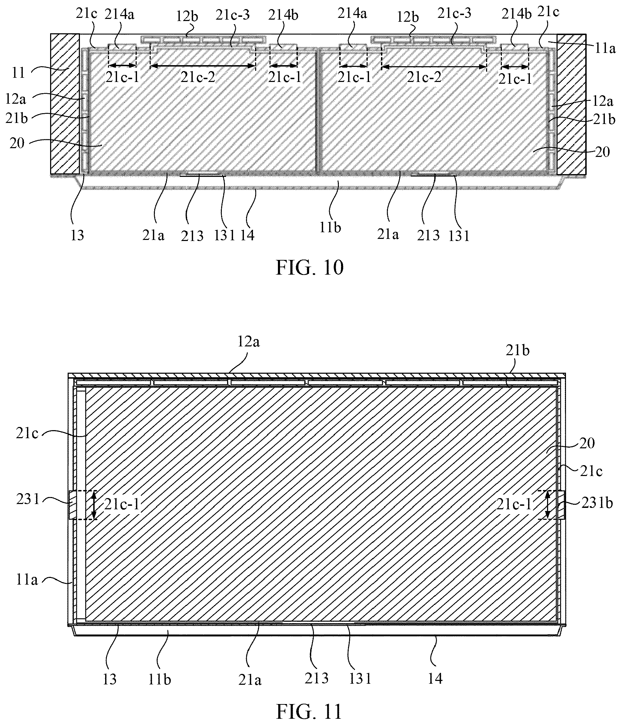

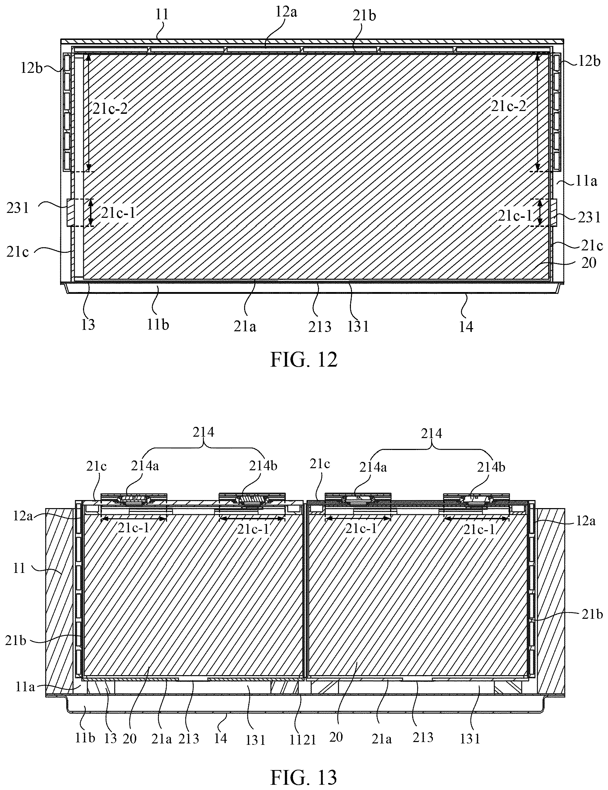

For example, as shown in FIG. 11 and FIG. 12, an electrode terminal 214 is disposed on the third wall 21c on the left side, an electrode terminal 214 is disposed on the third wall 21c on the right side, and the electrode terminal 214 disposed on the third wall 21c on the left side and the electrode terminal 214 disposed on the third wall 21c on the right side have opposite polarities.

It should be noted that, in a case that the number of third walls 21c is two, the position relationship between the two third walls 21c is not limited in the embodiments of the present application. For example, the two third walls 21c may be disposed adjacent to each other, or as shown in FIG. 11 and FIG. 12, the two third walls 21c may be disposed opposite to each other.

The position relationship among the first wall 21a, the second wall 21b and the third wall 21c is not limited in the embodiments of the present application.

Exemplarily, in some embodiments, as shown in FIG. 6, FIG. 8, FIG. 10 and FIG. 14, the third wall 21c is disposed opposite to the first wall 21a, and the second wall 21b is connected to the third wall 21c and the first wall 21a, that is, the second wall 21b is disposed adjacent to both the first wall 21a and the third wall 21c. In this way, when the pressure relief mechanism 213 is actuated, the emissions from the battery cell 20 that are discharged through the pressure relief mechanism 213 are discharged in the direction away from the electrode terminal 214. Therefore, the influence of the emissions on the electrode terminal 214 can be further reduced, the risk of high-voltage ignition is avoided, the danger is reduced, and thus the safety of the battery could be enhanced.

Further, optionally, in some embodiments, as shown in FIG. 8, the battery cell 20 includes two second walls 21b disposed opposite to each other, and the two second walls 21b are respectively connected to both ends of the third wall 21c and the first wall 21a.

Exemplarily, in some other embodiments, as shown in FIG. 9, FIG. 11 and FIG. 12, the second wall 21b is disposed opposite to the first wall 21a, and the third wall 21c is connected to the second wall 21b and the first wall 21a.

Further, optionally, in some embodiments, as shown in FIG. 9, the battery cell 20 includes two second walls 21b, one of the second walls 21b is disposed opposite to the third wall 21c, and the other second wall 21b is disposed opposite to the first wall 21a.

Optionally, in some embodiments, in order to facilitate the processing of a thermal management component, two first thermal management components 12a disposed on the two second walls 21b may be integrally molded. Certainly, the two first thermal management components 12a may be molded separately, which is not limited in the embodiments of the present application.

Optionally, in a case that the two first thermal management components 12a are integrally molded, the fluids accommodated in the two first thermal management components 12a may communicate with each other.

Optionally, in some embodiments, as shown in FIG. 6 to FIG. 14, a first region 21c-1 of the third wall 21c is provided with an electrode terminal 214. Further, as shown in FIG. 10 and FIG. 12, the box 11 further includes a second thermal management component 12b. The second thermal management component 12b is configured to accommodate a fluid to adjust the temperature of the battery cell 20, the second thermal management component 12b is attached to a second region 21c-2 of the third wall 21c, and the second region 21c-2 is different from the first region 21c-1. That is, the second thermal management member 12b is disposed on a region of the third wall 21c where the electrode terminal 214 is not disposed. In this way, the contact area between the thermal management components and the battery cell 20 is further increased, and the effect of adjusting a temperature of the battery cell 20 is relatively significant when the battery cell 20 is working normally. In addition, since the third wall 21c to which the second thermal management componentc12b is attached is not the first wall 21a of the battery cell 20 that is provided with the pressure relief mechanism 213, in this way, when the thermal runaway occurs in the battery cell 20, the emissions from the battery cell 20 that are discharged through the pressure relief mechanism 213 are discharged in directions away from the second thermal management component 12b and the electrode terminal 214. Therefore, the emissions do not break through the second thermal management component 12b. Meanwhile, the influence of the emissions on the electrode terminal 214 can be reduced, the risk of high-voltage ignition is avoided, the danger is reduced, and thus the safety of the battery could be enhanced.

Optionally, in a case that the third wall 21c is adjacent to the second wall 21b, in order to facilitate the processing of the thermal management components, the second thermal management component 12b and the first thermal management component 12a may be integrally molded. Certainly, the second thermal management component 12b and the first thermal management component 12a may be molded separately, which is not limited in the embodiments of the present application.

Optionally, in a case that the second thermal management component 12b and the first thermal management component 12a are integrally molded, the fluid accommodated in the second thermal management component 12b and the fluid accommodated in the first thermal management component 12a may communicate with each other.

It should be noted that the number of electrode terminals 214 and the number of first regions 21c-1 are equal. As shown in FIG. 6 to FIG. 10, a first electrode terminal 214a and a second electrode terminal 214b are disposed on the third wall 21c, the first electrode terminal 214a corresponds to a first region 21c-1, and the second electrode terminal 214b corresponds to a first region 21c-1.

The number of second regions 21c-2 is not limited in the embodiments of the present application.

Optionally, in some embodiments, as shown in FIG. 10, in order to facilitate attachment of the second thermal management component 12b to the battery cell 20, the second region 21c-2 is provided with a protrusion part 21c-3 protruding in a direction away from an interior of the battery cell 20, and the second thermal management component 12b is attached to the protrusion part 21c-3.

Optionally, in some embodiments, an electrode terminal 214 is disposed on the second wall 21b.

The number of electrode terminals 214 disposed on the second wall 21b is not limited in the embodiments of the present application.

In an example, one electrode terminal 214 may be disposed on the second wall 21b. In this case, another electrode terminal 214 may be disposed on a wall of the battery cell 20 other than the second wall 21b, or another electrode terminal 214 may be disposed on a wall of the battery cell 20 other than the second wall 21b and the first wall 21a.

In another example, two electrode terminals 214 may be disposed on the second wall 21b.

Optionally, in some embodiments, a third region of the second wall 21b may be provided with an electrode terminal 214. Further, the box 11 further includes the second thermal management component 12b described above. The second thermal management component 12b is configured to accommodate a fluid to adjust the temperature of the battery cell 20, the second thermal management component 12b is attached to a fourth region of the second wall 21b, and the third region is different from the fourth region. That is, the second thermal management member 12b is disposed on a region of the second wall 21b where the electrode terminal 214 is not disposed.

It should be noted that the number of electrode terminals 214 and the number of third regions are equal.

Further, optionally, in some embodiments, the fourth region is provided with a protrusion part protruding in the direction away from the interior of the battery cell 20, and the second thermal management component 12b is attached to the protrusion part.

The number of fourth regions is not limited in the embodiments of the present application.

Optionally, in some embodiments, for example, as shown in FIG. 6 to FIG. 13, the box 11 further includes an isolation component 13, and the isolation component 13 is attached to the first wall 21a.

In some embodiments, for example, as shown in FIG. 6 to FIG. 12, the isolation component 13 may serve as a bottom wall of the box 11, that is, the isolation component 13 is configured to isolate the electrical chamber 11a from the collecting chamber 11b. In this way, when the pressure relief mechanism 213 is actuated, the emissions from the battery cell 20 enter the collecting chamber 11b, and do not enter the electrical chamber 11a or enter the electrical chamber 11a in a small amount, so that the electrical connection in the electrical chamber 11a may not be affected. Therefore, the safety of the battery could be enhanced.

In some other embodiments, for example, as shown in FIG. 13, the isolation component 13 and a bottom wall 1121 of the box 11 are disposed separately, that is, one face of the isolation component 13 is attached to the first wall 21a, and another face thereof is attached to the bottom wall 1121 of the box 11. That is, by disposing the isolation component 13, there is a gap between the first wall 21a of the battery cell 20 and the bottom wall 1121 of the box 11, and the gap may provide a sufficient space for actuation of the pressure relief mechanism 213.

Optionally, in some embodiments, the isolation component 13 is provided with a weakened zone, and the weakened zone is configured to be capable of being damaged when the pressure relief mechanism 213 is actuated, so that the emissions pass through the weakened zone and enter the collecting chamber 11b. In this way, when the pressure relief mechanism 213 is actuated, the emissions may directly impact on the weakened zone to open the weakened zone, and enter the collecting chamber 11b.

Optionally, in some embodiments, the weakened zone is disposed opposite to the pressure relief mechanism 213. In this way, when the pressure relief mechanism 213 is actuated, the emissions may directly impact on the weakened zone to open the weakened zone.

The so-called "isolation" here refers to separation, which may refer to unsealing. For example, in some other embodiments, as shown in FIG. 6 to FIG. 13, the isolation component 13 may be provided with a through hole 131. The through hole 131 is configured such that the emissions are capable of entering the collecting chamber 11b through the through hole 131 when the pressure relief mechanism 213 is actuated. In this case, the electrical chamber 11a and the collecting chamber 11b are in communication with each other through the through hole 131. The function of the isolation component 13 is also to isolate the electrical chamber 11a from the collecting chamber 11b.

Optionally, in some embodiments, the through hole 131 is disposed opposite to the pressure relief mechanism 213. In this way, when the pressure relief mechanism 213 is actuated, the emissions can directly enter the collecting chamber 11b through the through hole 131.

Optionally, in some embodiments, as shown in FIG. 6 to FIG. 13, the box 11 further includes a protective member 14. The protective member 14 is configured to protect the isolation component 13, and the protective member 14 and the isolation component 13 form the collecting chamber 11b. The collecting chamber 11b formed by the protective member 14 and the isolation component 13 can effectively collect and buffer the emissions and reduce the danger.

The connection manner of the isolation component 13 to the battery cell 20 is not limited in the embodiments of the present application. For example, the isolation component 13 may be fixedly connected to the battery cell 20 by an adhesive.

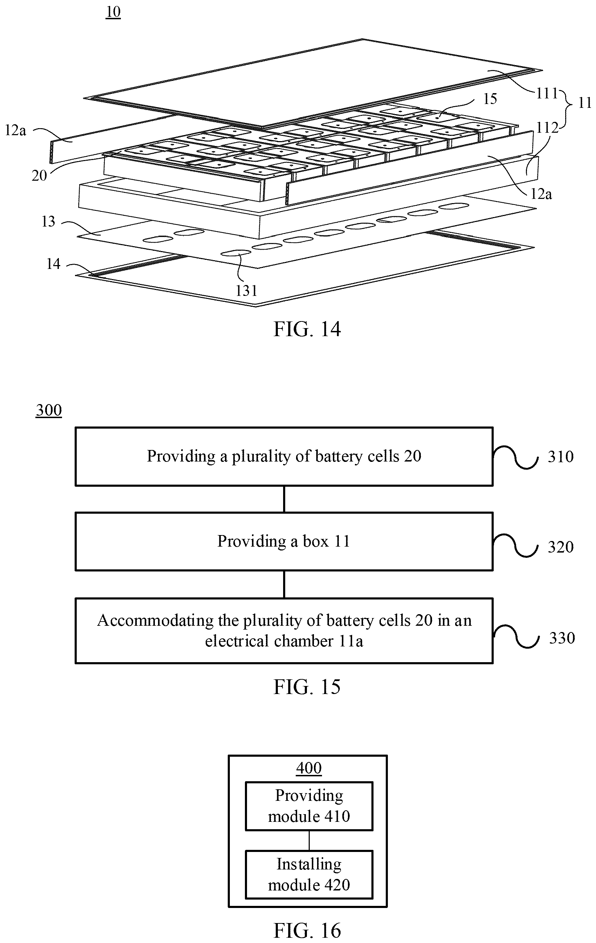

FIG. 14 is a schematic structural diagram of a battery provided in an embodiment of the present application.

As shown in FIG. 14, a battery 10 includes a plurality of battery cells 20 and the box 11 described above. The plurality of battery cells 20 are accommodated in the box 11. The battery cell 20 may be the battery cell 20 described in FIG. 6 to FIG. 13.

For the relevant description of the box 11 and the battery cell 20, reference may be made to the above description, which will not be repeated redundantly here.

Optionally, in some embodiments, the battery 10 further includes a bus component 15. The bus component 15 is configured to implement electrical connection between the plurality of battery cells 20.

Optionally, a first thermal management component 12a and/or a second thermal management component 12b may be further configured to adjust (mainly cool) the temperature of the bus component 15.

An embodiment of the present application further provides a power consumption apparatus, and the power consumption apparatus may include the battery 10 in the foregoing various embodiments. Optionally, the power consumption apparatus may be a vehicle 1, a ship or a spacecraft.

The battery 10 and the power consumption apparatus according to the embodiments of the present application are described above. A method and apparatus for producing a battery according to the embodiments of the present application will be described below, and for the parts that are not described in detail, reference is made to the foregoing embodiments.

FIG. 15 shows a schematic flowchart of a method 300 for producing a battery according to an embodiment of the present application. As shown in FIG. 15, the method 300 may include:
S310, providing a plurality of battery cells 20, a pressure relief mechanism 213 being disposed on a first wall 21a of a battery cell 20, and the pressure relief mechanism 213 being configured to be actuated when an internal pressure or temperature of the battery cell 20 reaches a threshold, to relieve the internal pressure;
S320, providing a box 11, the box 11 including an electrical chamber 11a, a collecting chamber 11b and a first thermal management component 12a; and
S330, accommodating the plurality of battery cells 20 in the electrical chamber 11a; where the collecting chamber 11b is configured to collect emissions from the battery cell 20 when the pressure relief mechanism 213 is actuated; and the first thermal management component 12a is configured to accommodate a fluid to adjust a temperature of the battery cell 20, the first thermal management component 12a is attached to a second wall 21b of the battery cell 20, and the second wall 21b is different from the first wall 21a.

FIG. 16 shows a schematic block diagram of an apparatus 400 for producing a battery according to an embodiment of the present application. As shown in FIG. 16, the apparatus 400 for producing the battery may include: a providing module 410 and an installing module 420.

The providing module 410 is configured to: provide a plurality of battery cells 20, a pressure relief mechanism 213 being disposed on a first wall 21a of a battery cell 20, and the pressure relief mechanism 213 being configured to be actuated when an internal pressure or temperature of the battery cell 20 reaches a threshold, to relieve the internal pressure; and provide a box 11, the box 11 including an electrical chamber 11a, a collecting chamber 11b and a first thermal management component 12a.

The installing module 420 is configured to accommodate the plurality of battery cells 20 in the electrical chamber 11a, where the collecting chamber 11b is configured to collect emissions from the battery cell 20 when the pressure relief mechanism 213 is actuated; and the first thermal management component 12a is configured to accommodate a fluid to adjust a temperature of the battery cell 20, the first thermal management component 12a is attached to a second wall 21b of the battery cell 20, and the second wall 21b is different from the first wall 21a.

Although the present application has been described with reference to the preferred embodiments thereof, various modifications can be made thereto without departing from the scope of the present application, and the components therein can be replaced with equivalents. In particular, as long as there is no structural conflict, various technical features mentioned in the various embodiments may be combined in any manner. The present application is not limited to the specific embodiments disclosed herein, and includes all technical solutions falling within the scope of the claims.

## Claims

1. A box of a battery, comprising:
an electrical chamber configured to accommodate a battery cell, a pressure relief mechanism being disposed on a first wall of the battery cell, and the pressure relief mechanism being configured to be actuated when an internal pressure or temperature of the battery cell reaches a threshold, to relieve the internal pressure;
a collecting chamber configured to collect emissions from the battery cell when the pressure relief mechanism is actuated; and
a first thermal management component configured to accommodate a fluid to adjust a temperature of the battery cell, the first thermal management component being attached to a second wall of the battery cell, and the second wall being different from the first wall.

2. The box according to claim 1, wherein an electrode terminal is disposed on a third wall of the battery cell, the third wall is different from the first wall, and the third wall is different from the second wall.

3. The box according to claim 2, wherein a first region of the third wall is provided with the electrode terminal; and
the box further comprises: a second thermal management component configured to accommodate a fluid to adjust the temperature of the battery cell, the second thermal management component being attached to a second region of the third wall, and the second region being different from the first region.

4. The box according to claim 3, wherein the second region is provided with a protrusion part protruding in a direction away from an interior of the battery cell, and the second thermal management component is attached to the protrusion part.

5. The box according to any one of claims 2 to 4, wherein the third wall is disposed opposite to the first wall, and the second wall is connected to the third wall and the first wall; or
the second wall is disposed opposite to the first wall, and the third wall is connected to the second wall and the first wall.

6. The box according to claim 1, wherein an electrode terminal is disposed on the second wall.

7. The box according to any one of claims 1 to 6, wherein the box comprises:
an isolation component configured to isolate the electrical chamber from the collecting chamber, the isolation component being attached to the first wall.

8. The box according to claim 7, wherein the isolation component is provided with a weakened zone, and the weakened zone is configured to be capable of being damaged when the pressure relief mechanism is actuated, so that the emissions pass through the weakened zone and enter the collecting chamber.

9. The box according to claim 8, wherein the weakened zone is disposed opposite to the pressure relief mechanism.

10. The box according to claim 7, wherein the isolation component is provided with a through hole, and the through hole is configured such that the emissions are capable of entering the collecting chamber through the through hole when the pressure relief mechanism is actuated.

11. The box according to claim 10, wherein the through hole is disposed opposite to the pressure relief mechanism.

12. A battery, comprising:
a plurality of battery cells, a pressure relief mechanism being disposed on a first wall of a battery cell, and the pressure relief mechanism being configured to be actuated when an internal pressure or temperature of the battery cell reaches a threshold, to relieve the internal pressure; and
the box according to any one of claims 1 to 11, the plurality of battery cells being accommodated in the box.

13. A power consumption apparatus, comprising: the battery according to claim 12, the battery being configured to provide electrical energy for the power consumption apparatus.

14. A method for producing a battery, comprising:
providing a plurality of battery cells, a pressure relief mechanism being disposed on a first wall of a battery cell, and the pressure relief mechanism being configured to be actuated when an internal pressure or temperature of the battery cell reaches a threshold, to relieve the internal pressure;
providing a box, the box comprising an electrical chamber, a collecting chamber and a first thermal management component; and
accommodating the plurality of battery cells in the electrical chamber; wherein the collecting chamber is configured to collect emissions from the battery cell when the pressure relief mechanism is actuated; and the first thermal management component is configured to accommodate a fluid to adjust a temperature of the battery cell, the first thermal management component is attached to a second wall of the battery cell, and the second wall is different from the first wall.

15. An apparatus for producing a battery, comprising:
a providing module configured to:
provide a plurality of battery cells, a pressure relief mechanism being disposed on a first wall of a battery cell, and the pressure relief mechanism being configured to be actuated when an internal pressure or temperature of the battery cell reaches a threshold, to relieve the internal pressure; and
provide a box, the box comprising an electrical chamber, a collecting chamber and a first thermal management component; and
an installing module configured to accommodate the plurality of battery cells in the electrical chamber, wherein the collecting chamber is configured to collect emissions from the battery cell when the pressure relief mechanism is actuated; and the first thermal management component is configured to accommodate a fluid to adjust a temperature of the battery cell, the first thermal management component is attached to a second wall of the battery cell, and the second wall is different from the first wall.
